Europäisches Patentamt

European Patent Office

Office européen des brevets

(11) Publication number: **0 091 177**
**B1**

(12) **EUROPEAN PATENT SPECIFICATION**

(45) Date of publication of patent specification: **29.01.86**

(51) Int. Cl.⁴: **B 60 K 15/08, F 17 C 1/02**

(21) Application number: **83200489.9**

(22) Date of filing: **06.04.83**

(54) **Flat, pressure-resistant reservoir suitable for containing a fluid under pressure.**

(30) Priority: **06.04.82 NL 8201470**

(43) Date of publication of application:
**12.10.83 Bulletin 83/41**

(45) Publication of the grant of the patent:
**29.01.86 Bulletin 86/05**

(84) Designated Contracting States:
**BE DE FR NL**

(56) References cited:
**DE-A-1 946 410**
**FR-A-2 097 312**
**NL-C- 31 520**
**US-A-2 341 547**

(73) Proprietor: **B.V. Machinefabriek en
Reparatiebedrijf D.E. Gorter
Sluiskade 23
NL-9601 LA Hoogezand (NL)**

(72) Inventor: **Schmied, Edmund Bastiaan
Kalkwijk 43
NL-9603 BB Hoogezand (NL)**

(74) Representative: **Urbanus, Henricus Maria, Ir.
et al
c/o Vereenigde Octrooibureaux Nieuwe
Parklaan 107
NL-2587 BP 's-Gravenhage (NL)**

## Description

The invention relates to a flat, pressure-resistant reservoir of a rigid material and suitable for containing a fluid under pressure, and comprising means for supplying the fluid to, and for removing it from, the reservoir.

Such a flat container is disclosed in German Offenlegungsschrift DE—A—1,946,410. This prior container is made of a synthetic plastics material and serves as a fuel reservoir for motor vehicles. The use of synthetic plastics material for making it indicates that the prior fuel reservoir is suitable for ordinary fuels, that is to say, those substantially liquid at ambient temperature and pressure, for example petrol.

The object of the invention is a reservoir having such an increased pressure resistance that it is also suitable to be used for the storage of liquid gas used as motor fuel, the so-called LPG.

For this purpose, according to the invention, there is provided a reservoir of the kind mentioned in the opening paragraph, which is characterized in that the reservoir is made of a metal with the hollow profiles being formed by deep drawing, and the juxtaposed parts of the dished longitudinal halves are interconnected in a leakproof fashion by welding, the generators of the frusto-conical profiles and the curved profile of the marginal zones of the dished longitudinal halves having the form of a quarter-circle and, owing to the selected distribution pattern of the profiles over the central part of the dished halves, the interior of the reservoir is subdivided into interconnected spherical pockets, whereby, accordingly, in the fuel reservoir according to the invention, use is made of the insight that the spherical shape best meets the requirements in connection with pressure resistance, as is known per se.

It is true that a substantially flat reservoir for the storage of liquefied gaseous motor fuel, the so-called LPG, is known from Netherlands patent application NL—A—77,03630. This prior reservoir, however, is limited in form and size to a construction that can be placed in the space of an automobile serving for a spare wheel. It will then be necessary to find another accommodation in the automobile for the spare wheel itself. With the constructional principle followed in the reservoir according to the invention, however, there are no restrictions as to any special shape or size.

It will be clear that, in the case of a fuel reservoir for motor vehicles, such as a passenger automobile, in addition to the aim for as light a weight of the reservoir as possible, because this is of importance for an economical operation of the automobile, in the widest sense, the highest demands are imposed on its pressure resistance by reason of the direct vicinity of passengers in the automobile, while also the reservoir must be capable of meeting the varying conditions under which the reservoir is used in this case, for example, fluctuating ambient temperatures.

It will be clear that a flat reservoir for liquefied gaseous motor fuel in automobiles makes possible a more useful arrangement of the space available for luggage: for example, by disposing the flat reservoir in a vertical position behind the rear seat, the loss of boot volume is minimized. Moreover, in this way, the weight of the reservoir is disposed approximately over the rear axle, which has a favourable effect on the way in which the rear axle is loaded.

In a further advantageous embodiment of the reservoir according to the invention, access to the spaces formed by the hollow deep-drawn profiles is closed by covering the walls of the reservoir, which are parallel to the longitudinal median plane of the reservoir, with metal plates, and connecting these to the reservoir by welding all around. There is thus provided an additional space separated from the interior of the reservoir, and which, after being fitted with supply and discharge means, is suitable for use as an additional storage accommodation for liquid material that is not, or not substantially, under pressure. In the use of the reservoir according to the invention as a container for liquefied gaseous motor fuel, this additional storage accommodation can be used with advantage as a space for the storage of a stand-by supply of petrol.

The invention is illustrated with reference to the drawings, showing an embodiment of the reservoir according to the invention in which the interior is divided into spherical pockets. In said drawings,

Fig. 1 is a perspective view showing a dished longitudinal half in the form of a rectangle with unequal sides, two of which are placed with the concave sides in contact with each other and welded together to form the reservoir;

Fig. 2 is an elevational view, partly broken away, of the reservoir according to the normal of the longitudinal median plane;

Fig. 3 is an elevational view, partly broken away, of the reservoir parallel to the longitudinal median plane in the direction of the longer side thereof;

Fig. 4 is an elevational view, partly broken away, of the reservoir parallel to the longitudinal median plane in the direction of the shorter side thereof; and

Fig. 5 is a view of the reservoir; similar to Fig. 3, covered on one of the two sides with a metal plate welded to the reservoir all around.

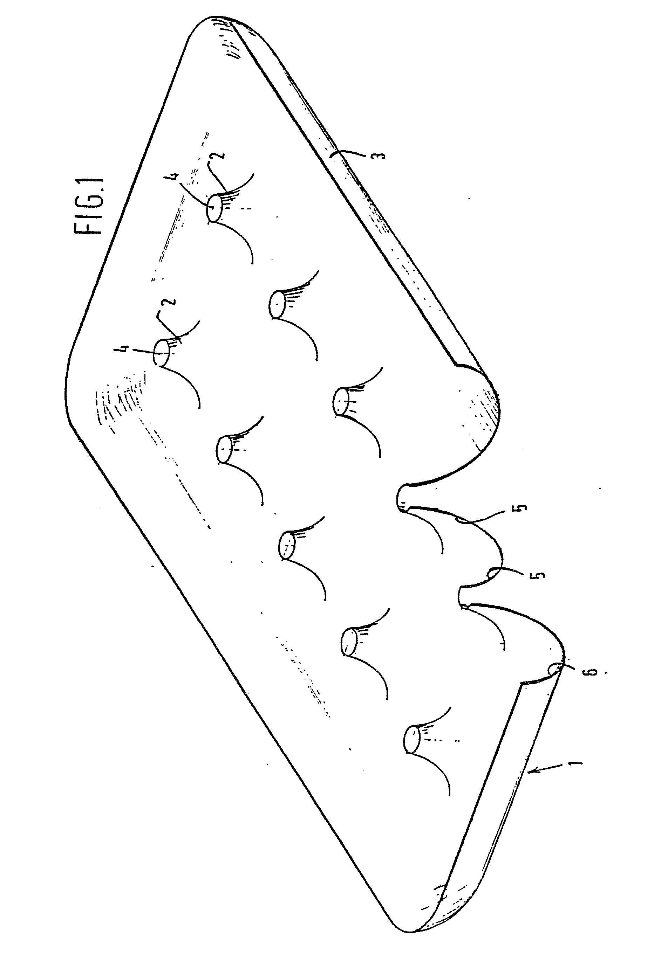

In Fig. 1, 1 designates a dish made of a flat metal plate, with profiles 2 being provided by deep drawing, and edge 3 by bending.

Profiles 2 have an open top 4.

The curvature of the generator 5 of the deep drawn profiles 2 and the curvature 6 of the curved edge 3 are in the form of a quarter-circle.

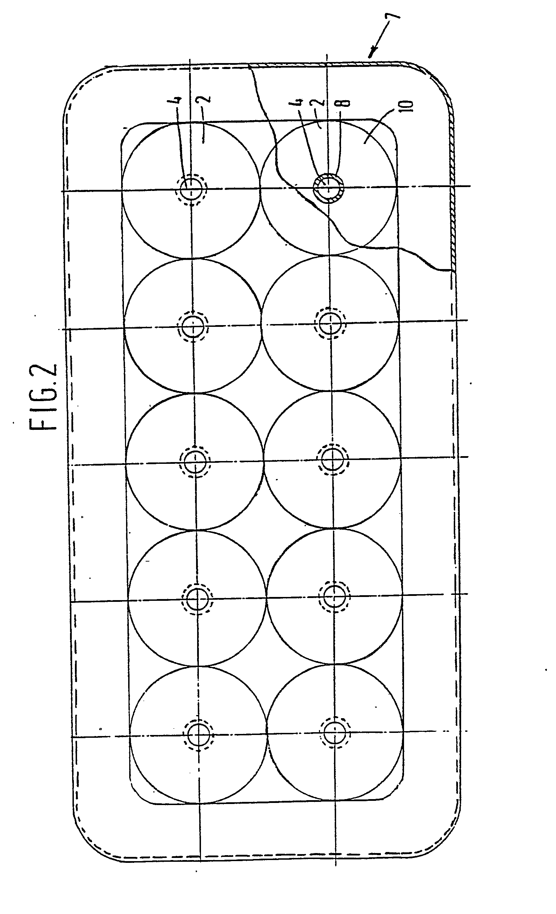

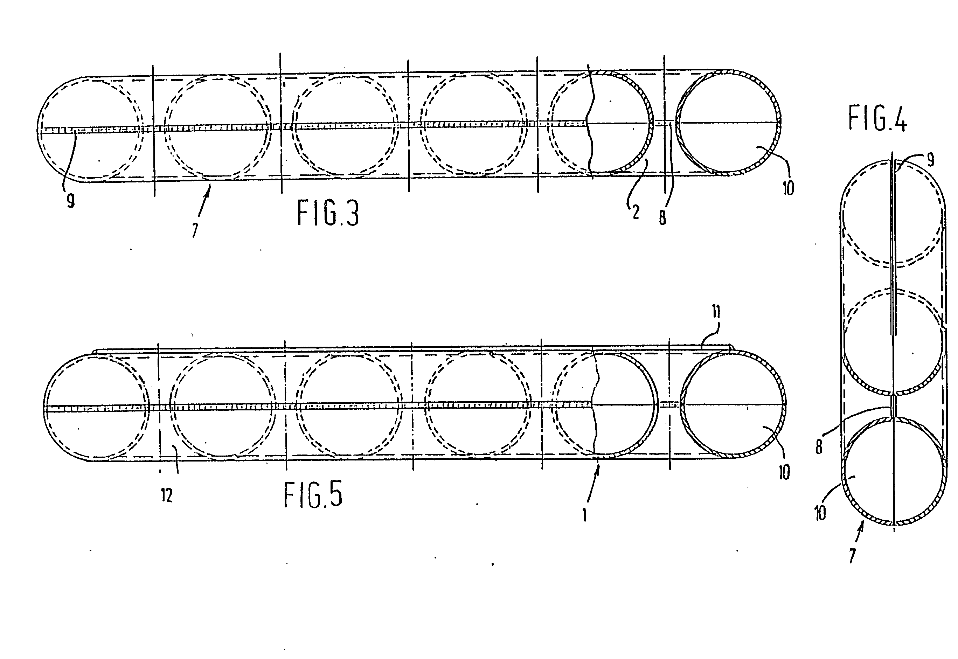

Reservoir 7, shown in Figs. 2—4, is obtained by placing two dishes 1 with the concave sides in contact with each other, the dishes being interconnected by interconnecting profiles 2 pairwise along their contacting surfaces by welding, as designated by 8, and also along the peripheral edge as indicated at 9. As a result of the selected profile configurations 5 and 6, the interior of the reservoir is divided into spherical cavities as indicated, for example, by 10, in which cavities liquid gas is stored.

If the reservoir 10 is covered on both sides by metal plates, as shown in Fig. 5 for one side of the reservoir by plate 11, a space 12 is formed, which can be used as an additional storage accommodation for liquids not substantially under pressure, or under low pressure, such as petrol.

The means for supplying liquid gas to the reservoir and for the controlled discharge thereof from the reservoir are not shown, but may be of any conventional type, as neither are the supply and discharge means to be connected to the additional storage accommodation 10 for the liquid to be received therein, such as petrol, which may also be of any conventional type.

## Claims

1. A flat, pressure-resistant reservoir of a rigid material, suitable for containing a fluid under pressure, comprising means for supplying the fluid to, and for discharging it from, the reservoir, which reservoir is composed of two dished longitudinal halves (1), the central part of each of which is provided, in the direction of the longitudinal median plane of the reservoir to be assembled, with a plurality of frustoconical hollow profiles (2) with open base and top (4), and the marginal zones (3) of the longitudinal halves being curved along their entire periphery in the same direction as said profiles, the dished longitudinal halves being placed in face-to-face relationship and being connected together in a leakproof fashion throughout their periphery and along the circumference of each of the contacting tops of the frustoconical hollow profiles, characterized in that the reservoir is made of a metal with the hollow profiles (2) being formed by deep drawing, and the contacting parts of the dished longitudinal halves are interconnected in a leakproof fashion by welding, the generators (5) of the frustoconical profiles and the curved profile (16) of the dished longitudinal halves (1) having the form of a quarter-circle and, owing to the selected distribution pattern of the profiles over the central part of the dished halves, the interior of the reservoir is subdivided into interconnected spherical pockets.

2. A reservoir according to claim 1, characterized in that access to the hollow deep-drawn profiles (2) is screened off by means of two metal plates (11) respectively provided at each of the sides of the reservoir, which are parallel to the longitudinal median plane thereof, and connected to the reservoir by welding all around, with means for supplying and discharging fluid being connected to the closed space thus formed.

## Patentansprüche

1. Flacher, druckbeständiger Behälter aus starrem Material zum Aufbewahren von einem unter Druck stehenden Fluid, mit Mitteln zum Zuleiten und zum Ableiten des Fluids zu bzw. aus dem Behälter, wobei der Behälter aus zwei schalenförmigen, länglichen Hälften (1) besteht, deren zentraler Teil jeweils in Richtung der Mittellängsebene des zusammenzubauenden Behälters mit einer Vielzahl kegelstumpfähnlicher Hohlprofile (2) mit offener Basis und offenem oberem Ende (4) versehen ist, wobei die Randzonen (3) der länglichen Hälften entlang dem gesamten Umfang in derselben Richtung umgebogen sind wie die genannten Hohlprofile und die schalenförmigen, länglichen Hälften einander zugewandt angeordnet und in flüssigkeitsdichter Weise entlang ihrem Rand und entlang dem Umfang jedes der sich berührenden Enden der kegelstumpfartigen Hohlprofile miteinander verbunden sind, dadurch gekennzeichnet, daß der Behälter aus einem Metall besteht, wobei die Hohlprofile (2) durch Tiefziehen erzeugt sind und daß die sich berührenden Bereiche der schalenförmigen, länglichen Hälften durch Schweißen flüssigkeitsdicht miteinander verbunden sind, daß die Erzeugenden der kegelstumpfähnlichen Profile und der abgebogenen Profile (6) der schalenförmigen, länglichen Hälften (1) die Form eines Viertel-Kreises haben und daß aufgrund des gewählten Verteilungsmusters der Profile über dem zentralen Bereich der schalenförmigen Hälften des Behälterinnere in miteinander verbundene sphärische Taschen unterteilt ist.

2. Behälter nach Anspruch 1, dadurch gekennzeichnet, daß der Zugang zu den hohlen, tiefgezogenen Profilen (2) durch zwei Metallplatten (11) abgeschirmt ist, die an jeder der beiden parallel zur Mittellängsebene des Behälters laufenden Seiten desselben angeordnet und durch Rundherumschweißen mit dem Behälter verbunden sind, wobei mit den so gebildeten, geschlossenen Räumen Mittel zum Zuführen und Abführen von Fluid verbunden sind.

## Revendications

1. Réservoir plat résistant à la pression, constitué en un matériau rigide, convenant pour contenir un fluide sous pression et comprenant des moyens pour introduire le fluide dans le réservoir et l'évacuer hors de ce dernier, lequel réservoir est constitué de deux moitiés longitudinales en forme de cuvettes (1), la partie centrale de chacune d'elles étant munie, suivant la direction du plan médian longitudinal du réservoir devant être formé par assemblage, d'une pluralité de profils creux ronconiques (2) comportant une base et un sommet (4) ouverts, et les zones marginales (3) des moitiés longitudinales étant incurvées le long de l'ensemble de leur pourtour dans le même sens que lesdits profils, les moitiés longitudinales en forme de cuvettes étant placées face à face et étant raccordées l'une à l'autre, d'une manière étanche aux fuites, sur l'ensemble de leur pourtour et le long de la circonférence de chacun des sommets, en contact mutuel, des profils creux tronconiques, caractérisé en ce que le réservoir

est constitué en un métal dans lequel les profils creux (2) sont ménagés par emboutissage profond, et les paerties en contact mutuel des moitiés longitudinales en forme de cuvettes sont reliées mutuellement par soudage, d'une manière étanche aux fuites, les courbes génératrices (5) des profils tronconiques et le profil incurvé (6) des moitiés longitudinales en forme de cuvettes (1) possédant la forme d'un quart de cercle et, compte tenu du réseau de distribution choisi des profils dans la partie centrale des moitiés en forme de cuvettes, l'intérieur du réservoir est subdivisé en poches sphériques reliées entre elles.

2. Réservoir selon la revendication 1, caractérisé en ce que l'accès aux profils creux (2) réalisés par emboutissage profond est empêché au moyen de deux plaques métalliques (11) situées respectivement sur les champs des faces du réservoir, qui sont parallèles au plan médian longitudinal de ce dernier, et raccordées au réservoir par soudage sur l'ensemble de leur pourtour, des moyens servant à introduire et à évacuer un fluide étant raccordés à l'espace clos ainsi formé.

FIG.1

FIG.2

FIG.3

FIG.4

FIG.5